# EUROPEAN PATENT SPECIFICATION

(11) **EP 1 912 901 B1**
(45) Date of publication and mention of the grant of the patent: **16.07.2014**
(21) Application number: 06787588.0
(22) Date of filing: 17.07.2006
(51) Int. Cl.: C02F 1/52, C02F 1/66, C02F 1/467, C02F 1/50, C02F 1/68, C02F 101/10, C02F 103/42

(54) **METHOD FOR CONTROLLING PH AND ALGAE GROWTH IN WATER**
VERFAHREN ZUR REGULIERUNG DES PH-WERTS UND DES ALGENWACHSTUMS IN WASSER
PROCEDE DE REGLAGE DU PH ET DU DEVELOPPEMENT D'ALGUES DANS L'EAU

(30) Priority: 15.07.2005 US 182110
(43) Date of publication of application: 23.04.2008
(60) Divisional application: 10013384.2
(73) Proprietor: Zodiac Pool Systems, Inc., Vista, CA 92081 (US)
(72) Inventor: COFFEY, Richard, T., Fort Lauderdale, FLORIDA 33301 (US); HAVEN, Micheal, Cincinnati, OH 45220 (US); HARNDEN, Robert, Tamarac, FL 33319 (US)
(74) Representative: Pavageau, Sabrina
(86) International application number: PCT/US2006/027698
(87) International publication number: WO 2007/011877

(56) References cited:
- EP-A2- 1 167 297
- WO-A-01/62673
- US-A- 5 223 144
- US-A- 5 500 131
- US-A1- 2002 034 421
- US-A1- 2005 133 461

## Description

The invention relates to methods for controlling pH in electrolytic chlorinators by the addition of Zu(II), La(III), Cc(III), Cc(IV) or Sn(II) salts, particularly halides of said transition metals, such as zinc (II) halides. The technique of the invention permits pH control without the need to add potentially dangerous protic acids to the water.

Purification of water, in particular of pool and spa water, is typically carried out by one or more of several different methods. Chemical methods typically involve adding chemical microbiocides, such as hypochlorite ion, silver ion, copper ion, and the like, to the water. The addition is either direct, as in most hypochlorite additions, or indirect, as in the addition of silver ion from an immobilized media, such as NATURE2^{®}, available from Zodiac Pool Care.

However, electrochemical methods may be used in place of, or in addition to, chemical methods, as described in U.S. Patent No. 6,761,827. In these methods, water having some concentration of halide ion in it (achieved by dissolution of quantities of sodium chloride, sodium bromide, or other halide salts into the water) is passed through an electrolytic cell. The halide ions are oxidized by electrolysis to form hypohalous acid, hypohalite ions, or both (believed to occur through the intermediate of molecular halogen), which have known utility in disinfecting water (and whose use is typically known as "chlorinating," brominating, or otherwise halogenating the water). In addition, the electrolysis reaction converts water into hydrogen and oxygen.

Electrolytic purification is desirable because it is safe, effective, and for applications such as swimming pools, hot tubs, spas, etc., it eliminates much of the need for the pool owner or operator to handle chemicals and monitor water chemistry. The salinity levels necessary to achieve effective chlorination levels are typically well below the organoleptic thresholds in humans, and the primary chemical required to be handled by the operator is a simple alkali metal halide salt. In addition, operation of the electrolytic cell is comparatively easy, and requires little attention beyond ensuring the proper current and voltage levels are set, and maintaining the correct salinity levels in the water.

A disadvantage associated with the use of electrolytic purification is an upward creep in pH. Electrolytic generation of chlorine-type disinfectants from chloride ions at the anode of the electrolysis cell also generates hydrogen and oxygen at the cathode of the electrolysis cell, consuming hydrogen ion and leaving hydroxyl ion, a strong base. The hydroxide ion cogenerated in the vicinity of the cathode can then distribute throughout the pool or spa water, gradually increasing the pH of the pool or spa water over time.

The pool owner or technician, in servicing the pool, must monitor this pH rise, and at a certain point, chemically treat the pool to bring the pool water back to an acceptable pH range, in order to maintain optimal efficiency of disinfection, algal control, water clarity, etc. Various techniques exist to accomplish this, the simplest being to simply add a quantity of mineral acid, e.g., HCl, to the pool water. While simple in theory, acid addition involves storage and handling of a potentially hazardous chemical in significant quantities, requires careful handling, mixing, and monitoring to avoid lowering the pH too much, and presents dangers of spills, splashes, burns, poisoning, and the like.

In addition, to be safe and effective, the added mineral acid must be dispersed throughout the pool thoroughly and quickly. Simply dumping large quantities of concentrated acid into the pool will likely create a localized region where the acid concentration is rather high, at least in the short term, until the acid is dispersed by diffusion and mixing of water by the filtration system. During this time, the pool is essentially unusable. The acid could be added in diluted form, which would speed mixing and increase safety, and indeed, this is done by many pool owners by adding muriatic acid to the pool. However, this technique is time consuming for the pool owner or technician, and requires skill, care, and attention during the mixing process to avoid spillage and burns, ensure that the correct amount of acid is added, etc., and also requires handling much larger volumes of material. Metering acid into the pool through the water circulation system used to filter the pool water would eliminate some of these problems, but is disadvantageous in that it can lead to corrosion of piping, pumps, and other flow control elements.

Because of the disadvantages described above, it would be desirable to have a method for controlling pH in electrolytically sanitized pools that eliminates the need for addition of strong protic acids to the pool water.

Possible alternative methods for lowering pH with reduced handling and monitoring by pool owners or maintainers include automated introduction of hydrochloric acid (U.S. Patent No. 5,362,368), addition of controlled amounts of acid and reaction in a fixed bed of base reactant (e.g. calcium carbonate) (DE 20011034 U1; CAN (Chemical Abstract Number 133:366155), automated shut-off of the electrolytic chlorinator when hydroxide levels reach a preset amount (U.S. Patent No. 5,567,283 and WO 9925455) or during certain time periods (BR 8804112; CAN 110:198879). Another approach involves discharging from the system any excess basic water from the vicinity of the cathode (U.S. Patent No. 3,669,857).

None of these methods provides a particularly acceptable solution to the problem. Automated introduction of hydrochloric acid still requires some handling of a potentially dangerous chemical. Techniques involving automated shut-off of the electrolytic cell also result in shut off of chlorination when the cell is not in operation. Accordingly, there remains a need in the art for a method for control of pH increase in electrolytic chlorinators that does not require the use or handling of strong acids, that is easily and safely implemented by pool owners and maintainers, and that is effective in reducing pH and maintaining it at desirable levels. Techniques requiring discharge of basic catholyte to waste require some mechanism for disposing of the caustic waste, adding complexity to the pool maintenance regimen.

Attempts appear to have been made to reduce pH by addition of an aqueous HCl solution containing 5 to 200 g dissolved Zn per liter through a metering pump in Schneider, CH 589008 (CAN 87:141081). This technique is claimed to maintain the pH of pool water relatively constant over a period of 3 months. The inclusion of zinc appears to be related to control of turbidity due to hydrated iron oxide; i.e., the zinc appears to be added as a clarifying agent, rather than to have any role in pH reduction, which is accomplished by the hydrochloric acid.

Techniques that do not require acid addition or control of chlorinator operation include adding CO₂ from gas cylinders into the pool or purification line (DE 2,255734; CAN 81:96311), and addition of granular MgO (optionally combined with CaO and/or Na₂O) as a pH control agent in a pool water system purified with sodium trichloroisocyanurate [sic], disclosed in JP Kokai Tokkyo Koho 08189217 (CAN 125:256656).

US 5,223,144 discloses a process for the treatment of an aqueous composition containing between about 5 wt.-% and about 95 wt.-% of a polyhydride alcohol, having a pH and containing at least one heavy metal, wherein said process comprises adjusting the pH of said aqueous composition to a pH between about 4.0 and about 7.5 by addition of an effective amount of a pH adjusting agent to form a pH-adjusted composition and adding thereto an effective amount of a precipitating agent for said heavy metal wherein said precipitating agent is selected from the group consisting of organic salts, inorganic salts and mixtures thereof.

US 2005/0133461 A1 discloses a composition for cleaning and sanitizing water in a swimming pool, comprising 45 % copper sulfate, 45 % zinc sulfate and 10 % aluminum sulfate, by weight.

Applicants' invention solves the problems associated with prior methods of pH control by the introduction of soluble transition metal salts into the pool water, as defined in claims 1 to 3. The transition metal salts contemplated are those capable of measurably affecting the pH of the water when added thereto. More particularly, the transition metal halides are those capable of measurably reducing the pH of the water when added thereto, eliminating or substantially reducing the need to add mineral acids to the water to control pH. Even more particularly, the transition metal salts contemplated are those capable of reacting with hydroxide ions to form a stable compound. Desirably, this stable compound is one that can be effectively removed from the pool water, but this is not necessary for the practice of the invention. Thus, the method of the invention relates to the use of transition metal salts to control pH in water having a source of hydroxide ions.

In a particular embodiment, Applicants' method of the invention relates to the use of transition metals salts such as transition metal halides, transition metal borates, transition metal sulfates that are relatively soluble in water, and that form transition metal hydroxides that are considerably less soluble in the water than the added transition metal salts. In particular, those transition metal salts that have high water solubility and have cations that form hydroxides having a log Ksp lower than around -16.5 have been found to be particularly suitable. Particularly suitable transition metal salts include zinc (II) salts, particularly zinc halides, particularly zinc chloride, cerium (III) salts, particularly cerium halides, particularly cerium (III) chloride, tin (II) salts, particularly tin halides, particularly tin (II) chloride, and lanthanum (III) salts, such as lanthanum (III) halides, which, according to this invention, are used to control the pH rise in water that accompanies electrolytic sanitation by production of hypochlorites. The methods of the invention provide a technique for slowing, and in some cases, reversing, the rise in pH that occurs in such sanitation systems, without the need to use or handle potentially hazardous chemical species, including strong acids, such as hydrochloric acid or sulfuric acid. Zinc chloride, in particular, is safe, easy to handle, readily dissolves in water, and forms a reaction product with hydroxyl ion that is only very slightly soluble in water, enabling it to be removed from the water by filtration or other means, if desired.

In addition, it has been found that it is desirable to provide the transition metal salts, in particular, zinc chloride, in a form that does not require the user to manipulate, prepare, or handle concentrated solutions thereof. However, providing the salt in the form of the dilute solution is desirable to ensure safe handling may be economically undesirable, since transportation and storage costs will be increased when compared to those for a concentrated solution. Accordingly, it is desirable to provide the transition metal salts to the consumer in a way that maximizes safety, minimizes handling, and minimizes storage and transportation costs. This is accomplished by providing the salt in solid form (e.g., in the form of a powder) which the user can introduce into a continuous or semi-continuous dosing apparatus via a dispenser or a container containing powdered salt or pre-measured amounts of salt solution, which does not require mixing or handling.

Following the above, the apparatus contains a mixing chamber in communication with a dispensing cartridge, (which can be optionally disposable), which allows the transition metal salt (or a concentrated solution thereof) to be metered into the mixing chamber in predetermined amounts. The mixing chamber contains an inlet and an outlet that are in fluid communication with a water source, such as a water return line of a pool or spa. Interposed between the chamber and the water source, either on the inlet side, or on the outlet side, or both, is a pumping device in fluid communication with both the mixing chamber and the water source. The pumping device causes water to flow from the water source into the mixing chamber, where it comes into contact with some or all of the transition metal salt (or solution thereof) contained in the dispenser and released by it into the mixing chamber. The resulting mixture of water and transition metal salt is then caused to flow back into the water source.

Yet another embodiment of the invention results from the realization that some transition metal salts provide, in addition to phosphate removal, algicidal and/or algistatic properties to water to which the salts have been added. In particular, it has been found that Zn (II) salts, such as Zn (II) halides, particularly zinc chloride, cerium (III) salts, particularly cerium halides, particularly cerium (III) chloride, tin (II) salts, particularly tin halides, particularly tin (II) chloride, can each help to remove phosphate from water, thereby reducing the nutrient level upon which algal growth depends, and thus reducing algal growth.

In addition to their properties in reducing phosphate (and thereby reducing the ability of algae to grow), transition metal salts, and in particular those described above with respect to phosphate removal, and in particular, zinc (II) salts like zinc (II) halides, have been found to provide an additional algistatic and/or algacidal effect, over and above the effect on algal growth resulting from phosphate removal.
FIG. 1 is a graph showing the effect on pH of the addition of zinc (II) chloride to water purified by an electrolytic chlorinator in a 6 L vessel.
FIG. 2 is a schematic diagram of one embodiment of an apparatus used to carry out the method of the invention.
FIG. 3 is a graph showing the effect on pH of the addition of zinc (II) chloride to water purified by an electrolytic chlorinator in a simulated pool.
FIG. 4 is a perspective view of an apparatus for adding transition metal salts to pool water.
FIG. 5 is an exploded perspective view of an embodiment of the apparatus of FIG. 4.
FIG. 6 is a close-up, cross-sectional view showing the interior of the lower portion of the apparatus of FIG. 4 and 5.
FIG. 7 is a schematic diagram of an embodiment of an apparatus used to introduce transition metal salt (or a solution thereof) to a pool return line.

As described above, the transition metal salts as according to claim 1, such as transition metal halides, borates, and sulfates can be used to control pH increases in pool or spa water that accompany sanitation of the water by "chlorination." Increases in pool water pH that accompany the operation of electrolytic chlorinators can be reduced and controlled by the addition of these transition metal halides. Particularly good results have been found with zinc halides, in particular, zinc chloride (ZnCl₂), but while the description herein focuses on this compound, it will be understood that the other transition metal halides described herein can be used in substantially the same way to control pH in water. In addition to providing good pH control; zinc chloride is safe and easy to handle, measure, and add to pool water. Zinc chloride is highly water soluble, making its dispersal in pool water rapid and easy for the pool owner.

In addition, other transition metal salts according to claim 1, such as transition metal sulfates, may also be used, and may be preferable, due to their high solubility. As indicated above, those transition metal salts that are (a) highly soluble in water and (b) contain cations that form hydroxides having a log Ksp (log of solubility product constant) of around -16.5 or lower. Examples of suitable hydroxides falling within this range are given in the table below.

| Compound | log Ksp |
|---|---|
| Zn(OH)₂ | -16.5 |
| La(OH)₃ | -18.5 |
| Ce(OH)₃ | -22.3 |
| Sn(OH)₂ | -26.5 |
| Ce(OH)₄ | -47.7 |

Soluble zinc salts are effective at both hydroxide and phosphate control, although other metal salts may be more effective at hydroxide control. Soluble cerium salts, while very effective at precipitating hydroxide and phosphate, are typically more costly than other metal salts. Tin (II) salts appear to be very effective at precipitating hydroxide.

Without wishing to be bound by any theory, it is believed that the transition metal salts used in this invention form a reaction product with hydroxyl ion (e.g., zinc hydroxide) that is very slightly soluble in water, pulling hydroxyl ion out of the water where it would raise pH. In addition, because the hydroxide product is relatively insoluble, it can be removed from the pool water if necessary to, for example, drive the reaction:

ZnCl₂ + 2OH⁻ ⇔ Zn(OH)₂ + 2Cl⁻

to the right.

In the discussion that follows, the term "pool" or "pool water" is intended not to be strictly limited to swimming pools, but to apply to any body of water whose pH must be controlled in response to a pH increase due to sanitation with a hypohalite. It is specifically intended to include water contained in spas, hot tubs, Jacuzzis, cooling towers, water purification installations, and the like.

The transition metal halide, e.g., zinc chloride, can be added to the pool water by any convenient technique. It has been found that continuous addition of fairly dilute aqueous solutions of zinc chloride provides better control of the pH time response than batch addition, although both are effective at controlling and slowing the rise in pH. Continuous addition of aqueous zinc chloride solution via a reservoir and pump arrangement provides continuous control; at appropriate concentrations of ZnCl₂, this method of addition can not only limit the increase in pH with time, but can actually reverse it, driving it back toward the pH level when operation of the chlorinator began. However, because zinc chloride is actually a Lewis acid, care should be taken that the amount added should not be so high as to drive the pH level below the starting point, unless that is what is desired.

In general, the amounts of transition metal halide added to the water may be substantially variable, depending upon water conditions, chlorination levels, and method of addition. For bulk addition, amounts of solid zinc chloride ranging from about 10 mg to about 30 mg per 3.79 L (gallon) of water can be used. Addition will need to be repeated every 1-2 days or so, or when pH begins to rise again, depending upon chlorinator operation, pool chemistry, weather conditions, and the like. Continuous addition can be of solid zinc chloride, but use of an aqueous solution is more practical, as solid zinc chloride will absorb moisture from the surrounding air quite quickly. Aqueous solutions of concentrations ranging from about 0.1 mM to about 1 M, more particularly, between about 10 mM and about 1 M can be advantageously used. Addition rates can be chosen so that about 2.4mg ZnCl₂/3.79L/hr is delivered to the water, in order to provide sufficient pH control for most conventional electrolytic chlorinators, which typically deliver 1mg Cl₂/3.79L/hr without causing cloudiness or imparting an off-white color to the water. The volume of ZnCl₂ solution needed per gallon of water per hour ranges from 1.8 ml for a 10 mM ZnCl₂ solution to 0.6 ml for a 30 mM ZnCl₂ solution. These molar concentrations of zinc chloride solution are suitable for the smaller volumes found in a spa or hot tub. For a full sized swimming pool, a more concentrated ZnCl₂ may be appropriate. For a 1 M solution, the addition rate would be about 0.18 L/hr, or about 1.4 L per 8 hour day. The use of a more concentrated solution reduces the volume of liquid that must be handled by the pool owner or technician, making use of the technique more practical. One of skill in the art can easily scale the addition rate based on these ranges and concentrations to a level suitable for any sized pool. If an electrolytic chlorinator is operated so as to release substantially more hydroxyl ions to the pool water (e.g., because the flow rate of chloride ion through the chlorinator is increased, or the chlorinator voltage is increased, or both), then a higher level of solution addition rate, or a more concentrated solution, may be required to maintain proper pH control.

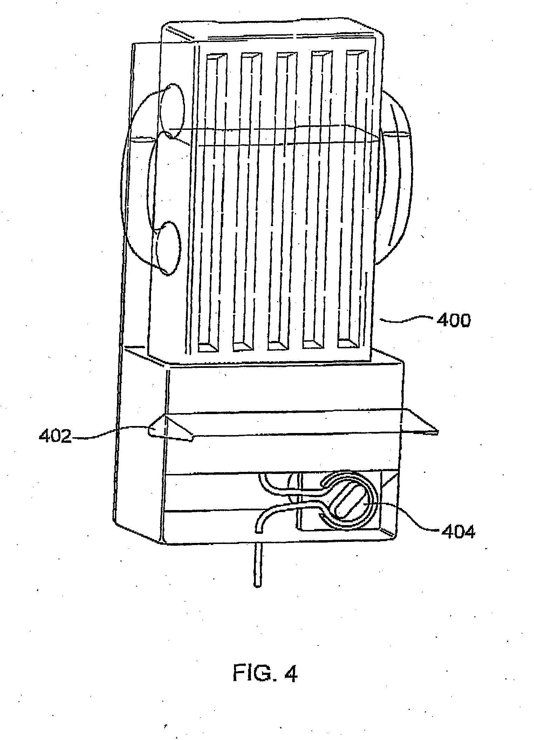

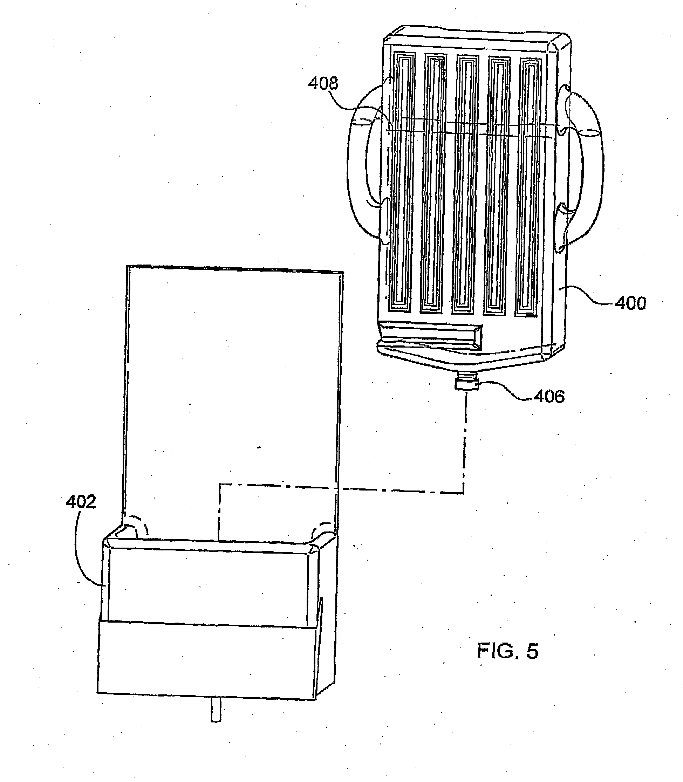

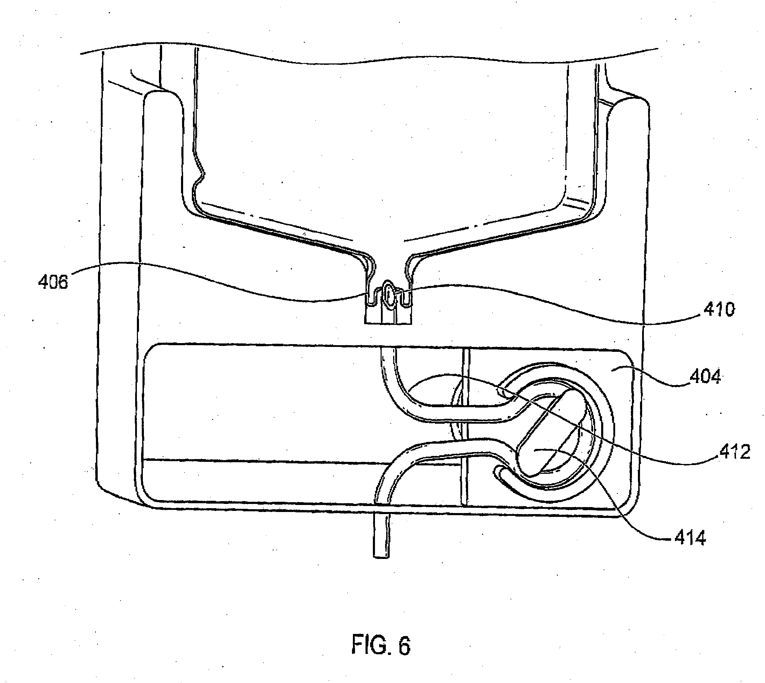

The zinc chloride, whether added as a batch or continuously, is added in the absence of hydrochloric acid, sulfuric acid, and/or other mineral acids. Moreover, pH control methods within the scope of the invention that include the addition of zinc chloride for pH control can be practiced without the addition of these acids to the pool water. In addition to avoiding the need to handle potentially hazardous chemicals conventionally used to control pH, the system to carry out the invention may lend itself to automated addition. For example, it is contemplated to be within the scope of the invention to add zinc chloride by controlled dispensing of an aqueous solution thereof by a pumping mechanism, such as a diaphragm or peristaltic pump, or by another dispensing mechanism, e.g., a venturi inlet. An example of a suitable device is shown in FIG. 4, 5, and 6. In FIG. 4, dispenser 400 is removably disposed in housing 402 which provides a mechanism for stably mounting dispenser 400, and contains a connector and conduit leading to pumping device 404, illustrated here as a peristaltic pump. In exploded view FIG. 5, the level of material in dispenser 400 is indicated by line 408, and material flows out of dispenser 400 through fitting 406, which is shown in FIG. 5 and FIG. 6. As indicated in FIG. 6, fitting 406 is releasably connected to opening 410 in conduit 412, which is connected to pumping mechanism 404. As illustrated, pumping mechanism 404 is a peristaltic pump, which moves material through conduit 412 via the action of rotor 414.

This controlled dispensing mechanism can be connected electronically to a pH meter and a feedback controller so as to continuously control zinc chloride addition in response to changes in water pH. As the pH in the pool changes past a set point, a pH meter senses this change and signals a controller to add more zinc chloride to the water when the deviation from the set point reaches a certain differential. When pH returns to the set point (i.e., within the differential from the set point) as measured by the pH meter, the controller discontinues zinc chloride addition.

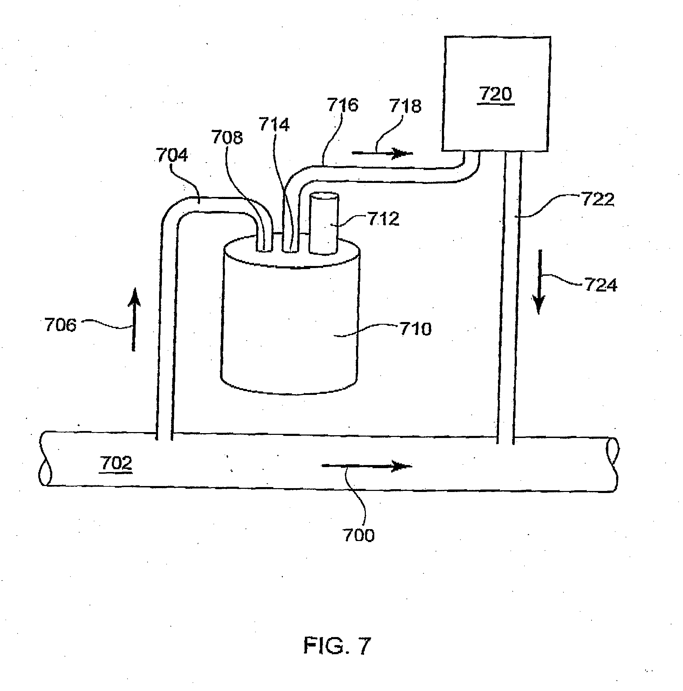

An example of a suitable apparatus not part of the invention as claimed for introducing pH controlling amounts of transition metal salts is shown in FIG. 7. Flow paths taken by the water flowing in the apparatus are indicated by the arrows. A portion of water flowing in conduit 702 (e.g., a pool or spa return line), whose direction of flow is indicated by arrow 700, is diverted by inlet line 704 as indicated by arrow 706. This water flows through fluid inlet opening 708 into mixing chamber 710, where it comes into contact and mixes with transition metal salt introduced into mixing chamber 710 by dispenser 712. The mixture of water and transition metal salt is withdrawn from mixing chamber 710 through fluid outlet opening 714 and passed by outlet conduit 716 to pumping mechanism 720, as indicated by arrow 718. The water and transition metal salt mixture leaving pumping mechanism 720 is returned to conduit 702 via outlet line 722, as indicated by arrow 724.

The mixing chamber 710 can be desirably equipped with a mechanism to automate filling with water through inlet opening 708, until water reaches the desired level therein. Any suitable control mechanism can be used to regulate the amount of water introduced into the mixing chamber 710, e.g. a level sensor, such as a float affixed to a lever arm, that maintains an inlet valve in an open position until the water in the mixing chamber 710 reaches the desired level, at which point the inlet valve is closed. The water level set point is that which provides the volume of water necessary to obtain the desired transition metal salt concentration in the mixing chamber 710. The mixing chamber 710 functions to both produce the transition metal salt solution in the desired concentration without the need for handling of the material by the pool owner, and to store the solution for later use in response to a change in pH in the pool water, as described above.

Mixing chamber 710 is in flow communication with dispenser 712, which contains transition metal salt or a transition metal salt solution. If the transition metal salt is present in solid form, it may be in a variety of forms, such as a powder, granules, tablets, or a combination of these. Moreover, the dispenser 712 can serve as the source of other materials desirably introduced into the water, such as algicides, algistats, biofilm controlling materials, clarifiers or flocculants, phosphate removers, nitrate removers, cyanurate removers, and the like.

The dispenser 712 may be configured to provide a unit dose of transition metal salt or other material to the mixing chamber 710, which is then filled with the appropriate amount of water, and the resulting mixture dispensed over time to the water until depleted, at which time the dispenser 712 is replaced and the mixing chamber 710 refilled. The dispenser can be configured to provide gravity flow of the transition metal salt or solution thereof to the mixing chamber 710, or a pumping mechanism (not shown) can be interposed between the dispenser 712 and the mixing chamber 710, suitable for moving liquid or solid materials from the dispenser 712 to the mixing chamber 710.

Alternatively, dispenser 712 may be configured to contain multiple doses, which can be dispensed to the mixing chamber 710 when it is emptied of solution. In this way, less user maintenance and/or changing of dispensers is needed. For example, the dispenser 712 could be configured to contain separate subchambers, each containing a unit dose of transition metal salt and/or other material to be introduced into the water, and each having a dispensing opening that can be brought into communication with the mixing chamber when that subchamber is to be used, but is not in communication with the mixing chamber when another subchamber is in use. This could be accomplished, e.g., by rotating the dispenser 712 to bring a new subchamber into communication with mixing chamber 710, or by mixing chamber 710, such that an opening between mixing chamber 710 and dispenser 712 communicates with the subchamber in use, and not with other subchambers. Alternatively, a separate connector between dispenser 712 and mixing chamber 710, such as a collar or other connector, having an opening whose position can be varied, can be used to variably connect the outlets of subchambers of dispenser 712 with mixing chamber 710.

Pumping mechanism 720 can be any pump suitable for introducing water from mixing chamber 710 to conduit 702. Peristaltic or diaphragm pumps are particularly suitable, but the apparatus is not so limited. Moreover, as illustrated in FIG. 7, pumping mechanism 720 is disposed between the fluid outlet opening 714 of mixing chamber 710 and outlet line 722 leading to conduit 702. In this configuration, water flow into the mixing chamber 710 is primarily the result of the pressure differential between the water in conduit 702 and mixing chamber 710, and pumping mechanism 720 serves primarily to pump solution from mixing chamber 710 back to conduit 702. It will be recognized, however, that an additional pumping mechanism disposed between conduit 702 and fluid inlet opening 708 can be used if desired.

To increase safety and ease of operation, the apparatus can be configured in such a way that mixing chamber 410 and dispenser 412 are an integrated single chamber, in similar fashion to that shown in FIG. 4 and FIG. 5.

Other transition metal halides that can be used in the invention according to the appended claims include those capable of reacting with hydroxyl ion to form an insoluble or slightly soluble product. These include zinc bromide, zinc iodide, and tin halides, such as stannous chloride (anhydrous and dihydrate), stannous bromide, and stannous fluoride. As indicated above, other very soluble transition metal salts, such as transition metal sulfates, may be used in combination with, or in place of, some or all of the halide salts.

### EXAMPLES

A DuoClear™ 15 electrolytic chlorinator sold by Zodiac Pool Care was suspended in a vessel containing 6 L of water and operated on an intermittent cycle on its lowest setting during the testing described below. The vessel was arranged so that zinc chloride could be added by either batch addition or through a peristaltic pump, and which was monitored for pH over time. The vessel was stirred with a magnetic stirrer. None of the examples involved the addition of hydrochloric acid or other mineral acids to the water, and temperature and other operating conditions were consistent from run to run. In the Comparative Examples below, conditions were the same as for the Examples, but zinc chloride was not added.

### COMPARATIVE EXAMPLE 1

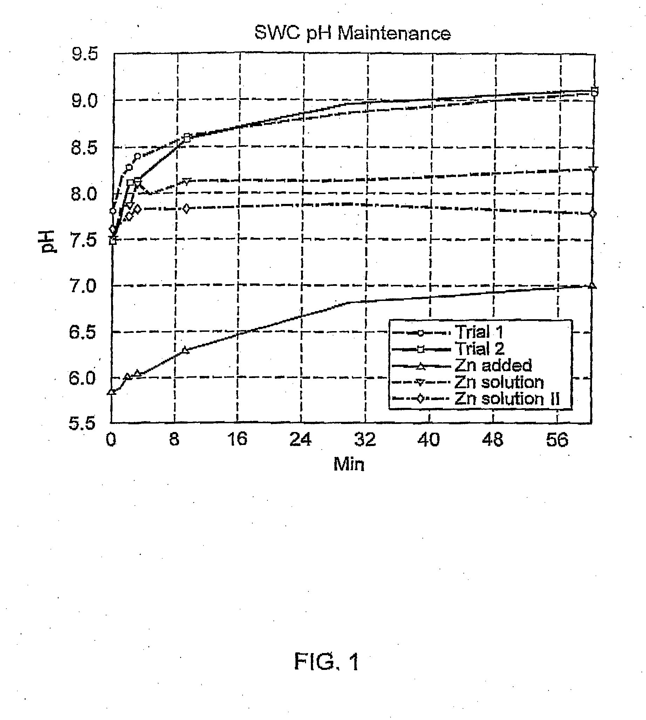

The operating conditions for Example 1 were followed except that no zinc chloride was added. Under two different trials, pH of the water increased from a beginning pH of 7.5 or 7.75 to a pH of approximately 9.1 after running the electrolytic chlorinator for only 60 minutes. This is represented graphically in FIG. 1 by the curves labeled "Trial 1" and "Trial 2."

### EXAMPLE 1

The apparatus was operated as described above. Prior to operation and zinc addition, the water was conditioned to simulate pool water by adding 1.2 g CaCl₂ (to simulate water hardness) and 0.8 g NaHCO₃ (to simulate water alkalinity), followed by addition of 10 g NaCl to provide the desired salinity for the electrolytic chlorinator. 6.28 g of zinc chloride was added by one-time batch addition and mixed overnight. Because the zinc chloride is a Lewis acid, this addition and mixing reduced the initial pH from 7.9 to 6.0. The resulting increase in pH was limited to approximately 1.25 pH units over 60 minutes, from an initial pH of around 5.75 to a final pH of around 7 (as indicated in FIG. 1 by the curve labeled "Zn added"). This is approximately half of the pH increase occurring in the control experiments.

### EXAMPLE 2

The procedure described in Example 1 was followed, except that following water conditioning, zinc chloride was added as a 12.2 mM aqueous solution via a peristaltic pump at a rate of 10.5 ml/min. The pH time response of the system to this addition is shown by the curve in FIG. 1 labeled "Zn Solution." The pH of the system shows a net increase of only about 0.8 pH units over 60 minutes of operation. Perhaps more significantly, after about 10 minutes of operation, the pH time response curve is essentially flat, with only a slight upward trend occurring at about 60 minutes. This is in contrast to both the control and the batch addition curves which, while seeming to increase more slowly after 60 minutes, still show a more decided upward trend.

### EXAMPLE 3

The procedure described in Example 2 was followed, except that the zinc chloride was added as a 25 mM solution at a rate of 10.2 ml/min. The pH time response is given by the curve labeled "Zn Solution II" in FIG. 1. Over the course of 60 minutes of operation, the pH increase was only about 0.2 pH units. Moreover, after about 30 minutes of operation, the pH time response curve was trending downward, indicating that the zinc chloride addition was not only preventing further pH increase, but was actually beginning to reverse the increase and return pH toward the pH level when the chlorinator operation began.

### EXAMPLE 4

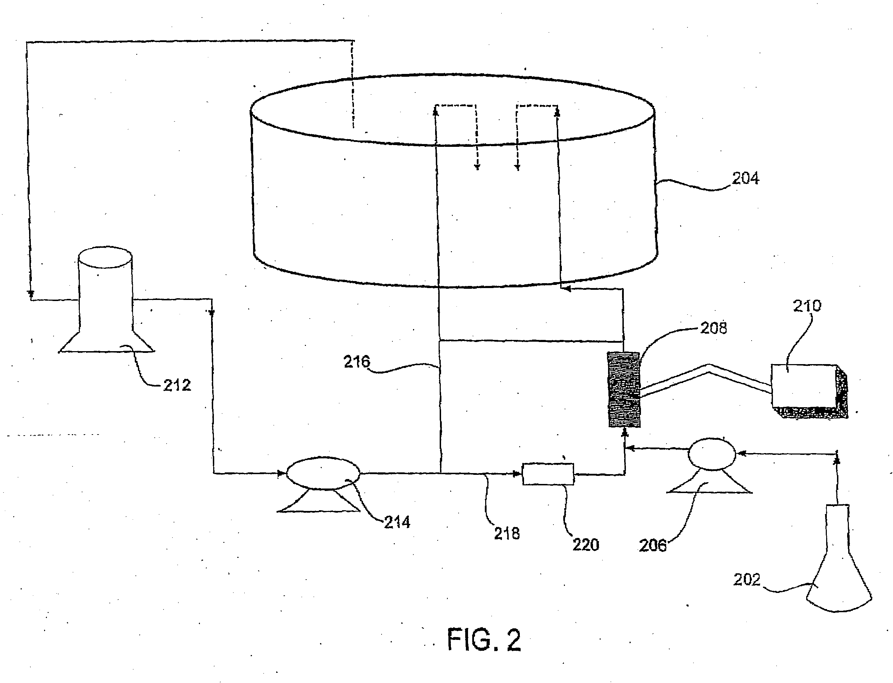

The electrolytic chlorination and ZnCl₂ addition procedure was scaled up to a 758L (200 gallon) "mini-pool" using the apparatus having a filter, recirculation pump, ZnCl₂ metering pump and flask containing the ZnCl₂ solution, chlorine cell and controller, and plumbing system, all in fluid communication with the pool as shown schematically in FIG. 2, which could also be applied to a full sized pool with appropriate changes in equipment. In this system, zinc chloride is supplied as a 25 mM aqueous from reservoir 202 to the mini-pool 204. The solution is forced by peristaltic pump 206 through electrolytic chlorinator 208 (which is controlled by controller 210. Water in mini-pool 204 is recirculated through filter 212 by centrifugal pump (1.5 kW (2 hp)) 214. A portion (or all) of the recirculated water may be returned to mini-pool 204 by bypass line 216, while another portion is conducted by line 218 through flow meter 220 to electrolytic chlorinator 208. Those of skill in the art will recognize that the same or similar arrangement of apparatus could be used to purify water and control pH in much larger pools, optionally using larger capacity equipment.

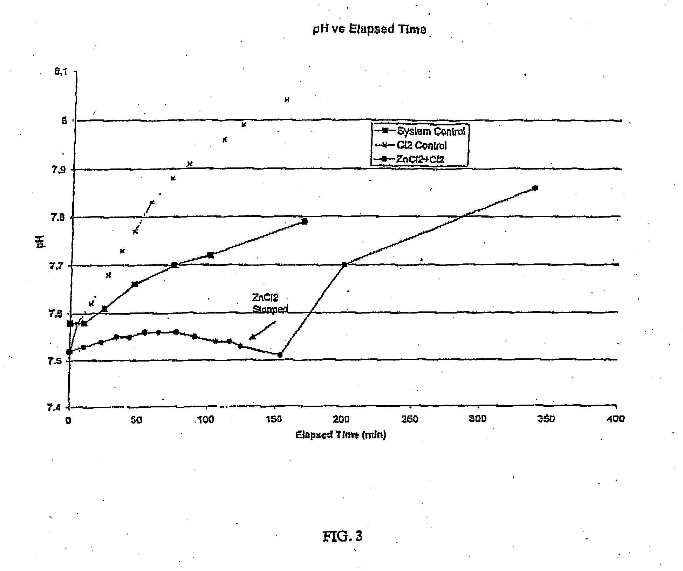

Three experiments were conducted, monitoring pH, temperature, and free available chlorine. All were conducted in simulated pool water, balanced with respect to pH, total alkalinity, hardness and cyanuric acid chlorine stabilizer. Pumping flow rate was roughly 80gpm. The first experiment was a "system control", monitoring pH and temperature without chlorination or addition of ZnCl₂. The second experiment was a "Cl₂ control", where only chlorine was added at a rate of 2 g/hr. The third experiment ("ZnCl₂ + Cl₂") involved chlorination at the same rate as experiment 2 plus the continuous, in-line metered addition of a 25 mM solution of ZnCl₂ at a rate of 1.2 liters/hr, which was a 5% stoichiometric excess. The temperature-corrected pH was monitored in-line with readings taken at regular intervals. The water temperature increase of 4.5 °C was consistent for all three experiments. FIG. 3 graphically depicts the pH curves of all three experiments. The system control pH increased by 0.2 pH units over a period of 170 minutes, which is believed to be the result of CO₂ loss from the water. A 0.5 pH unit increase was experienced in the Chlorine control experiment over a period of 155min. Finally, the ZnCl₂ metering experiment resulted in no pH increase over the course of 125 minutes during which the ZnCl₂ metering pump was operating. After 125 minutes of elapsed time, the ZnCl₂ pump was turned off while the pH continued to be monitored. As seen in the figure, the pH dropped 0.02 units followed by an increase of 0.35 units over a 200 minute period as the excess ZnCl₂ was consumed and an excess of hydroxyl ion was generated by the chlorinator.

The Examples described above show that transition metal halides, such as zinc chloride, can be effectively used to control the increase in pH resulting from the use of electrolytic chlorination, to sanitize pools. This use does not require the handling of dangerous protic acids, does not cause corrosion of ancillary pipes or other equipment, lends itself to automation, and requires little care and maintenance.

Transition metal salts can have an algacidal/algistatic effect, resulting in decreases in algae over and above what is obtained by phosphate removal. In particular, zinc salts, such as zinc borate, zinc chloride, zinc sulfate, and the like, have been found to have an effect on algae that is better than that obtained with copper salts. Copper salts are frequently used in the pool care industry to control algae, despite their propensity to stain pool surfaces. It has been found that, surprisingly, zinc salts produced better control of algae at lower concentrations than obtainable with copper salts, without the risk of staining. Further, zinc is generally accepted to be safe for human consumption in small quantities (and indeed is a component of various over-the-counter cold remedies and dietary supplements). Zinc concentrations of at least 0.01 ppm, and more particularly, ranging from about 0.1 to about 0.5 ppm, more particularly from about 0.25 to about 0.5 ppm, can be used. The example given below further illustrates the use of zinc salts to control algae.

### EXAMPLE 5

An algae nutrient medium was prepared by mixing the following with 940 mL deionized (DI) water :
1. 10 ml NaNO₃ (10g/400 water)
2. 10 ml CaCl₂.2H₂O(1.0 g/400 ml water)
3. 10 ml Mg SO₄.7H₂O (3.0 g/400 ml water)
4. 10 ml KH₂PO₄ (3.0 g/400ml water)
5. 10 ml K₂HPO₄(7.0 g/400ml/water)
6 10 ml NaCl 1.0 gram/400ml/water)
0.5 g peptone was added; the resulting solution had a pH of 6.30.

Primary stocks were made by including each of the test compounds in the table below in DI as 100 mL aliquots of 1000 ppm solutions. Working stocks in algae media were made as 128 ppm solutions (13 mL/100 mL DI). These solutions were serially diluted and placed into disposable borosilicate tubes, each containing 5mL of algae medium. The highest theoretical concentration of each compound tested was 64 ppm; as a result of the serial dilution, concentrations of 32, 16, 8, 4,2, l, 0.5, and 0.25 ppm were tested. Each tube as inoculated with 50 µL of 10-12 day old *Chlorella vulgaris,* having an approximate density of 3.0 x 10⁵ cells/mL. Growth was evaluated in a semi-quantitative fashion by visually observing bottom pellicle formation, which was compared to 2 controls. In the table below, +++ indicates good growth, ++ indicates scant growth, + indicates very low growth, and - indicates no growth.

| Test Compound | Concentration of Test Compound (ppm) | | | | | | | | |
|---|---|---|---|---|---|---|---|---|---|
| | 64 | 32 | 16 | 8 | 4 | 2 | 1 | 0.5 | 0.25 |
| Dodecylamine HCl (solid) Alfa Aesar | - | - | - | - | - | - | - | - | - |
| CuSO₄ (solid) | - | - | - | - | - | - | + | ++ | ++ |
| Zinc borate (solid) | - | - | - | - | - | - | - | + | + |
| Ultrakleen compound/Sterilex solid | - | - | - | - | - | - | +++ | +++ | +++ |
| WSCP (solid) Buckman | - | - | - | - | - | - | +++ | +++ | +++ |
| JAQ Quat (solid) Lonza | - | - | - | - | - | - | - | - | - |

These results indicate that, even when present at lower concentrations than copper salts, zinc salts provide more effective algae control than do copper salts. While the data given above are for zinc borate, other zinc salts, as well as tin salts, should provide similar benefits. The transition metal salts showing algicidal/algistatic activity can be advantageously combined with other algicides, algistats (e.g., dodecylamine salts, quaternary ammonium salts), surfactants (typically nonionic or cationic), antimicrobial materials (e.g., Nature²), and the like. The algistatic/algicidal compositions can be administered to pool water using the apparatus described herein, or through a conventional in-line pool system, such as a Nature² system, or by simply mixing with the pool water.

Some of the advantages provided by this invention include:
1. Use of transition metal salts as described herein provides control of pH without the need to handle potentially dangerous or corrosive protic acids, leading to increased user safety and decreased maintenance costs.
2. Several of the transition metal salts described herein provide a combination of pH control and algicidal/algistatic activity, potentially decreasing the number of chemicals that must be added to maintain pool or spa water.
3. The methods described herein can form part of an integrated pH/algal control technique, whereby, for example, at the start and/or end of the pool using season, the water is treated with phosphate remover, e.g., by dispensing an effective amount of a phosphate removing transition metal salt composition from a Nature² cartridge containing the same, followed by treatment throughout the season with an effective amount of a pH modifying/algistatic/algicidal transition metal salt throughout the pool use season.

## Claims

1. A method for controlling pH in water of an electrolytically sanitized pool, notably a swimming pool, a spa, a hot tub or a Jacuzzi, comprising:
adding to said water a zinc(II), lanthanum(III), cerium(III), ceriurm(IV) or tin(II) salt, wherein the salt is soluble in water and contains a cation that forms a hydroxide having a log Ksp of from about -16.5 to about -47.7, and
reducing the pH of the water with the salt.

2. The method of claim 1, wherein the salt is a halide, borate or sulphate.

3. The method of claim 1, wherein the salt is a zinc(II), cerium(III) or tin(II) salt and wherein the amount of salt is added in an algicidal or algistatic amount of salt for controlling algal growth.

## Patentansprüche

1. Verfahren zur Kontrolle des pH-Werts im Wasser eines elektrolytisch desinfizierten Beckens, im Speziellen eines Schwimmbeckens, eines Spas, eines Whirlpools oder eines Jacuzzi, umfassend:
den Zusatz von Zink-(II), Lanthan-(III), Zer-(III), Zer-(IV) oder Zinn-(II) Salz ins besagte Wasser, wobei das Salz im Wasser löslich ist und ein Kation enthält, das ein Hydroxid bildet, mit einem log Ksp, das zwischen etwa -16,5 und etwa -47,7 liegt, und
die Reduzierung des pH-Werts im Wasser mit dem Salz.

2. Verfahren nach Anspruch 1, bei dem das Salz ein Halit, ein Borat oder ein Sulfat ist.

3. Verfahren nach Anspruch 1, bei dem das Salz ein Zink-(II), Zer-(II) oder Zinn-(II) Salz ist, und die Salzmenge einer Menge an Salz mit algizider oder algistatischer Wirkung beigefügt wird, um das Algenwachstum zu kontrollieren.

## Revendications

1. Procédé de contrôle du pH dans l'eau d'un bassin aseptisé de manière électrolytique, en particulier une piscine, un spa, un bain à remous ou un jacuzzi, comprenant :
l'ajout dans ladite eau d'un sel de zinc(II), lanthane(III), cérium(III), cérium(IV) ou étain(II), selon lequel le sel est soluble dans l'eau et contient un cation qui forme un hydroxyde ayant un log Ksp compris entre environ -16,5 et environ -47,7, et
la réduction du pH de l'eau avec le sel.

2. Procédé selon la revendication 1, selon lequel le sel est un halogénure, un borate ou un sulfate.

3. Procédé selon la revendication 1, selon lequel le sel est un sel de zinc(II), cérium(II) ou étain(II) et la quantité de sel est ajoutée dans une quantité de sel algicide ou algistatique pour contrôler la croissance des algues.
